# EUROPÄISCHE PATENTANMELDUNG

(11) **EP 0 897 058 A2**
(43) Veröffentlichungstag der Anmeldung: **17.02.1999**
(21) Anmeldenummer: 98108682.0
(22) Anmeldetag: 13.05.1998
(51) Int. Cl.: F02F 3/00

(54) **Kolben für Brennkraftmaschinen**

(30) Priorität: 11.08.1997 DE 19734654
(71) Anmelder: AE GOETZE GmbH, D-51399 Burscheid (DE)
(72) Erfinder: Junge, Klaus, Prof., 13465 Berlin (DE)

(57) **Zusammenfassung**

Die Erfindung betrifft einen Kolben (1) für eine Brennkraftmaschine. Der Kolben (1) weist eine Nabe (3) auf, die ausschließlich über Rippen (5, 5') mit dem Kolbenboden (4) verbunden ist. Die Übertragung von Druckkräften erfolgt über den Kopf eines Pleuels (10) und über einen Bolzen (9).

## Beschreibung

Die Erfindung betrifft einen Kolben, insbesondere für Brennkraftmaschinen, mit einer zentral vom Kolbenboden ausgehenden Nabe zur Aufnahme eines Bolzens, mit einer Lagerstelle für den Kopf eines Pleuels und je einem auf der Druck- und Gegendruckseite angeordneten Schaftteil, welches über Versteifungsrippen gegenüber der Nabe abgestützt ist.
Bei modernen Brennkraftmaschinen geht die Entwicklung zu immer größeren Literleistungen bei reduziertem Kraftstoffverbrauch. Der Forderung nach möglichst geringen oszillierenden Massen steht die Haltbarkeit des Kolbens aufgrund der hohen Beanspruchung entgegen. Um die Temperatur am Kolbenboden in Grenzen zu halten ist eine gute Ableitung der Verbrennungswärme über den Kolben erforderlich.

Aus dem Stand der Technik sind Kolben zu entnehmen, die ein geringes Gewicht aufweisen. Die FR 25 34 343 A1 offenbart einen gattungsgemäßen Kolben.
Der Kolbenschaft ist lediglich auf der Druck- und Gegendruckseite ausgebildet.
Die Bolzennabe ist zentral am Kolbenboden angeordnet und geht massiv in den Kolbenboden über. Um die Biegespannungen im Kolbenbolzen zu minimieren, weist die Bolzennabe Lagerstellen für einen speziell ausgebildeten Pleuelkopf auf Die auf die Bolzennabe ausgeübten Kräfte werden über zwei, mit dem Kolbenschaft verbundenen Versteifungsrippen aufgefangen.
Bei dieser Konstruktion ist die Ausbildung des Pleuels besonders aufwendig und teuer, darüber hinaus wird die am Kolbenboden auftretende Temperatur über die massive Ausbildung direkt in die Nabe geleitet. Aufdiese Weise herrschen in der Bolzennabe hohe Temperaturen, die zu hohen Öltemperaturen und damit zu Schmierungsproblemen führen.

Der Erfindung liegt die Aufgabe zugrunde, die Öltemperaturen im Bereich der Bolzennabe zu reduzieren, wobei gleichzeitig die Masse der oszillierenden Bauteile und die Biegespannungen im Kolbenbolzen reduziert werden.
Diese Aufgabe wird erfindungsgemäß durch die kennzeichnenden Merkmale des Hauptpatentanspruchs gelöst.
Vorteilhafte Ausgestaltungen der Erfindung sind in den Unteransprüchen dokumentiert.
Im Gegensatz zum Stand der Technik ist die Bolzennabe nur noch über Rippen mit dem Kolbenboden verbunden, so daß die Warmeableitung auf die Bolzennabe nicht mehr so groß ist. Die aufden Kolbenboden auftretenden Druckkräfte werden sowohl über den Kolbenbolzen als auch direkt aufden Pleuelkopf übertragen, wodurch die Biegespannungen im Kolbenbolzen reduziert sind.

Die Erfindung ist nachstehend anhand eines Ausführungsbeispieles dargestellt und wird im folgenden näher erläutert.
Es zeigen:
Fig. 1 Ansicht eines erfingungsgemäßen Kolben
Fig. 2 Ansicht gemäß Schnittlinie II-II der Figur 1
Fig. 3 Ansicht von unten auf den Kolben gemäß Figur 1
Fig. 4 Ansicht gemäß Schnittlinie IV-IV der Figur 3
Fig. 5 Kolben gemäß Figur 4 mit eingebautem Pleuel
Fig. 6 Alternative Pleuelbefestigung gemäß Figur 5

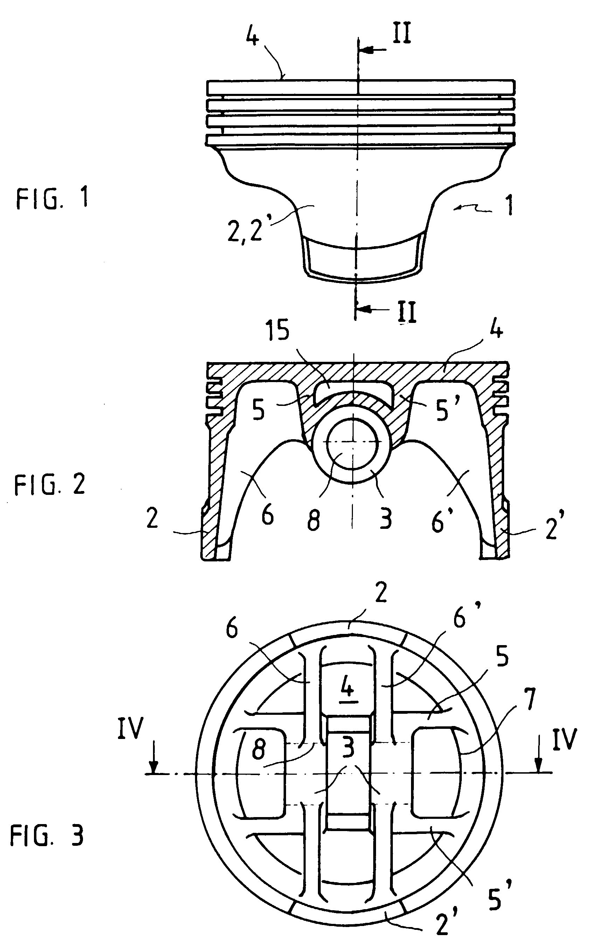

Die Figur 1 zeigt einen im Gießverfahren hergestellten Kolben (1) aus Leichtmetall. Der Kolben (1) ist einteilig ausgeführt und weist lediglich zwei diametral gegenüberliegende Schaftteile (2, 2') auf. In Achsrichtung der Nabe (3 / Fig. 2) ist der Kolben (1) offen ausgebildet.

In der Figur 2 ist die Anbindung der Nabe (3) mit dem Kolbenboden (4) dargestellt.

Zwei am Aussenumfang der Nabe (3) angeordnete Rippen (5, 5') erstrecken sich bis zum Kolbenboden (4). Vom Schaftteil (2, 2') erstrecken sich zwei Versteifungsrippen (6, 6') zum Kolbenboden (4).

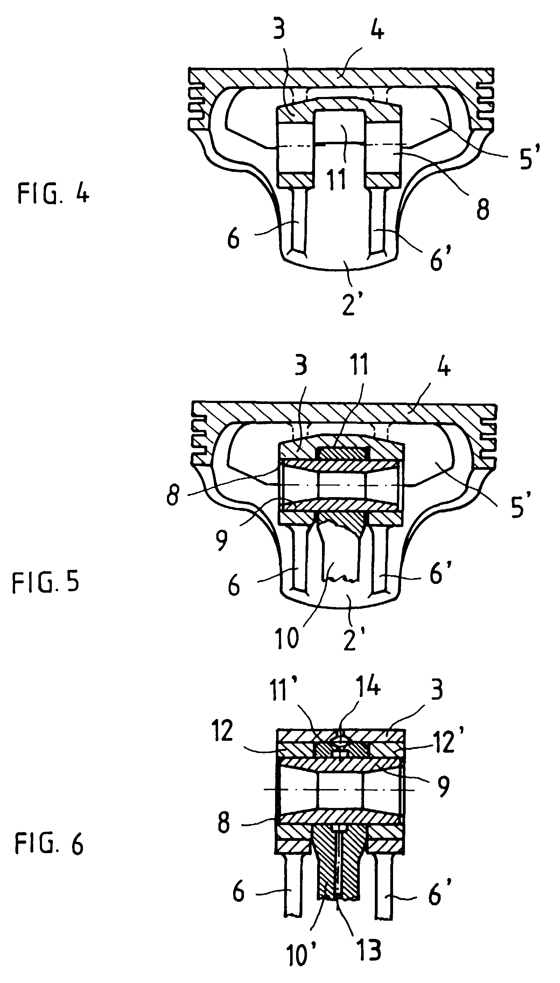

Wie aus der Figur 3 ersichtlich, erstrecken sich die Rippen (5, 5') bis zum Kolbenbodenrand (7). Die Nabe (3) weist eine Bohrung (8) zur Aufnahme eines Bolzens (9) auf (Fig. 5). Diese Nabe (3) ist so gestaltet, daß ein konventionelles Pleuel (10, 10') zur Anwendung gelangen kann (Fig. 5 und Fig. 6).

Die Figur 4 zeigt eine Lagerstelle (11) mit größerem Radius als der Radius der Bohrung (8) der Nabe (3). Die Lagerstelle ist als Teilzylinderfläche ausgebildet. Auf diese Weise werden die vom Kolbenboden (4) über die Rippen (5, 5') und Verteilungsrippen (6, 6') übertragenden Druckkräfte über die gesamte axiale Länge der Nabe (3) in das Pleuel (10) geleitet, ohne das extreme Biegespannungen auf den Bolzen (9) ausgeübt werden.

Die Figur 6 zeigt die alternative Ausgestaltung der Pleuelbefestigung. Der Radius der Lagerstelle (11) entspricht dem Radius der Bohrung (8). Zur Befestigung des Pleuels (10') dienen Passungsbuchsen (12, 12') so daß auch hier die gesamte axiale Länge der Nabe (3) zur Übertragung von Druckkräften genutzt werden kann. Darüber hinaus besteht die Möglichkeit, über die Bohrung (13) im Pleuel (10) und Ölbohrungen (14), in der Nabe (3), Öl in den Raum (15 / Fig. 2) zwischen den Rippen (5, 5') zu fördern, um den Kolbenboden(4) zu kühlen. Aufgrund der Rippenlagerung der Nabe (3) tritt eine verbesserte Kühlwirkung auf, die es ermöglicht, den erfindungsgemäßen Kolben (1) für leistungsstarke Motoren einzusetzen.

## Patentansprüche

1. Kolben, insbesondere für Brennkraftmaschinen, mit einer zentral vom Kolbenboden ausgehenden Nabe zur Aufnahme eines Bolzens mit einer Lagerstelle für den Kopf eines Pleuels und je einem auf der Druck- und Gegendruckseite angeordneten Schaftteil, welches über Versteifungsrippen gegenüber der Nabe abgestützt ist, dadurch gekennzeichnet, daß die Nabe (3) durch gegenüberliegende, parallel zur Nabenachse verlaufende am Außenumfang der Nabe (3) angeorndnete Rippen (5, 5') mit dem Kolbenboden (4) verbunden ist, wobei die Anbindung auf der Innenseite des Kolbenbodens (4) sich bis zum Kolbenbodenrand (7) erstreckt.

2. Kolben nach Anspruch 1, dadurch gekennzeichnet, daß die Rippen (5, 5') die Versteifungsrippen (6, 6') kreuzen.

3. Kolben nach Anspruch 1 und 2, dadurch gekennzeichnet, daß die Lagerstelle (11) für den Kopf des Pleuels (10) als Teilzylinderfläche ausgebildet und mittig in der Nabe (3) angeordnet ist

4. Kolben nach den Ansprüchen 1 bis 3, dadurch gekennzeichnet, daß der Radius der Teilzylinderfläche größer als der Radius der Bohrung (8) für den Bolzen (9) ausgebildet ist.

5. Kolben nach den Ansprüchen 1 bis 3, dadurch gekennzeichnet, daß der Radius der Teilzylinderfläche dem Radius der Bohrung (8) entspricht.

6. Kolben nach Anspruch 5, dadurch gekennzeichnet, daß das Pleuel (10) über den Bolzen (9) und Passungsbuchsen (12, 12') in der Nabe (3) gehalten ist.

7. Kolben nach Anspruch 1 bis 6, durch gekennzeichnet, daß die Nabe (3) in Richtung des Kolbenbodens (4) gerichtete Ölbohrungen (14) aufweist.
